# EUROPÄISCHE PATENTSCHRIFT

(11) **EP 3 169 884 B1**
(45) Veröffentlichungstag und Bekanntmachung des Hinweises auf die Patenterteilung: **16.06.2021**
(21) Anmeldenummer: 15738056.9
(22) Anmeldetag: 13.07.2015
(51) Int. Cl.: F01N 3/20, G01F 23/296

(54) **VERFAHREN ZUR BESTIMMUNG DES FÜLLSTANDS IN EINEM TANK**
METHOD FOR DETERMINING THE FILL STATE IN A TANK
PROCÉDÉ DE DÉTERMINATION DU NIVEAU DE REMPLISSAGE DANS UNE CUVE

(30) Priorität: 14.07.2014 DE 102014109843
(43) Veröffentlichungstag der Anmeldung: 24.05.2017
(73) Patentinhaber: Vitesco Technologies GmbH, 30165 Hannover (DE)
(72) Erfinder: BORSOI, Sonny, F-57380 Faulquemont (FR); DIOUF, Cheikh, F-57530 Silly-sur Nied (FR); DUPRIEZ, Mathieu, F-57530 Les Étangs (FR); MESMER, Denis, F-57320 Bouzonville (FR)
(86) Internationale Anmeldenummer: PCT/EP2015/065942
(87) Internationale Veröffentlichungsnummer: WO 2016/008832

(56) Entgegenhaltungen:
- WO-A1-2013/135486
- WO-A1-2014/090848
- DE-A1-102004 028 547

## Beschreibung

Die Erfindung betrifft ein Verfahren zur Bestimmung des Füllstands in einem Tank für eine Flüssigkeit. Das Verfahren kann insbesondere zur Bestimmung des Füllstandes in einem Tank in einem Kraftfahrzeug verwendet werden, in welchem ein flüssiges Additiv zur Abgasreinigung gespeichert wird.

Kraftfahrzeuge mit Abgasbehandlungsvorrichtungen, in die zur Abgasreinigung ein flüssiges Additiv zugegeben wird, sind weit verbreitet. Besonders häufig anzutreffen sind solche Abgasbehandlungsvorrichtungen, in denen das Verfahren der selektiven katalytischen Reduktion (SCR-Verfahren, SCR = Selective Catalytic Reduction) durchgeführt wird. Bei diesem Verfahren werden Stickstoffoxidverbindungen im Abgas mit Ammoniak zu unschädlichen Substanzen wie Stickstoff, Wasser und CO2 reduziert. Ammoniak wird in einem Kraftfahrzeug normalerweise nicht direkt bevorratet, sondern in Form eines flüssigen Additivs, welches in einem Tank gespeichert werden kann. Ein solches flüssiges Additiv zur Abgasreinigung wird dann abgasextern in einem dafür vorgesehenen Reaktor oder abgasintern innerhalb einer Abgasbehandlungsvorrichtung zu Ammoniak umgesetzt. Besonders häufig wird als flüssiges Additiv Harnstoff-Wasser-Lösung verwendet. Eine Harnstoff-Wasser-Lösung mit einem Harnstoffgehalt von 32, 5 Gew. % ist unter dem Handelsnamen AdBlue® erhältlich.

Häufig ist es erforderlich, eine Information über den Füllstand in einem Tank für flüssiges Additiv zu gewinnen. Eine Information über den Füllstand kann dazu verwendet werden, geeignete Zeitpunkte zum Auffüllen des Tanks zu ermitteln. Darüber hinaus kann verhindert werden, dass der Tank während des Betriebs vollständig entleert wird.

Zur Bestimmung des Füllstands in einem Tank für flüssiges Additiv sind Ultraschallfüllstandsensoren bereits vorgeschlagen worden. Ultraschallfüllstandsensoren weisen üblicherweise eine Ultraschallsendeeinheit und eine Ultraschallempfangseinheit auf. Die Ultraschallsendeeinheit sendet eine Ultraschallwelle aus, die an einer Flüssigkeitsoberfläche innerhalb des Tanks reflektiert wird und von dort zurück zu dem Ultraschallfüllstandsensor läuft und von der Ultraschallempfangseinheit des Ultraschallfüllstandsensors empfangen wird. Die Ausbreitungsgeschwindigkeit der Ultraschallwelle in der Flüssigkeit in dem Tank ist entweder bekannt oder sie wird mit einer Referenzmessung ermittelt. Aus der Laufzeit der Ultraschallwelle von dem Ultraschallfüllstandsensor zu dem Flüssigkeitsspiegel und zurück zu dem Ultraschallfüllstandsensor und der Ausbreitungsgeschwindigkeit der Ultraschallwelle in der Flüssigkeit wird der Füllstand in dem Tank berechnet.

Ein Vorteil von Ultraschallfüllstandsensoren ist, dass diese keine beweglichen Teile aufweisen. Darüber ist es mit Ultraschallfüllstandsensoren möglich, die Füllhöhe in einem Tank auch bei unterschiedlichen Tankhöhen mit derselben Sensorbauform zu messen. Unterschiede hinsichtlich der möglichen Füllhöhe im Tank müssen lediglich in einer Auswerteeinheit hinterlegt sein, mit der die von der Ultraschallempfangseinheit empfangenen Ultraschallwellen ausgewertet werden. Von der Ultraschallempfangseinheit empfangene Ultraschallwellen, die auf von der Ultraschallsendeeinheit ausgesendete Ultraschallwellen zurückgehen und beispielsweise an der Flüssigkeitsoberfläche reflektiert wurden, werden im Folgenden auch als Signale bzw. als Antwortsignale bezeichnet, die von der Ultraschallempfangseinheit bzw. von dem Ultraschallfüllstandsensor empfangen werden.

Es sind zwei verschiedene Anordnungen von Ultraschallfüllstandsensoren in einem Tank bekannt. Gemäß einer bekannten Anordnung werden Ultraschallwellen von einer Oberseite auf einen Flüssigkeitsspiegel in dem Tank gesendet und von dort zurück nach oben zurück zu dem Ultraschallfüllstandsensor reflektieren. In einer weiteren bekannten Anordnung werden Ultraschallwellen von einem Ultraschallfüllstandsensor am Boden des Tanks durch die Flüssigkeit zum Flüssigkeitsspiegel im Tank gesendet, und an dem Flüssigkeitsspiegel zurück zu dem Ultraschallfüllstandsensor am Boden des Tanks reflektiert.

Weiter oben wurde bereits erläutert, dass zur Bestimmung der Ausbreitungsgeschwindigkeit von Ultraschallwellen in einer Flüssigkeit eine Referenzmessung durchgeführt werden kann. Es ist bekannt, für die Referenzmessung die Laufzeit einer Ultraschallwelle entlang einer bekannten Messstrecke in der Flüssigkeit zu bestimmen. Eine Messstrecke kann beispielsweise mit mindestens einer Referenzfläche ausgeführt sein, an welchen die Ultraschallwelle reflektiert wird. Vorzugsweise ist die Position der Referenzflächen bzw. der Abstand zwischen zwei Referenzflächen genau bekannt. Anhand der Laufzeit der Ultraschallwelle zu der Referenzfläche oder anhand einer Differenz der Laufzeiten der Ultraschallwellen zu mehreren (beispielsweise zwei) Referenzflächen kann eine Laufgeschwindigkeit der Ultraschallwelle in der Flüssigkeit ermittelt werden.

WO 2013/135486 A1 beschreibt eine Fördereinheit zur Entnahme von flüssigem Additiv aus einem Tank gemäß dem Stand der Technik, wobei ein Sensor zur Bestimmung des Füllstands im Tank vorgesehen ist. In WO 2013/135486 A1 werden eine oder zwei Referenzflächen verwendet.

Problematisch bei der Durchführung einer derartigen Referenzmessung ist es, dass die durch die mindestens eine Referenzfläche vorgegebene Messstrecke vollständig innerhalb der Flüssigkeit angeordnet sein muss. Dies ist insbesondere bei wechselnden Füllständen und Füllhöhen der Flüssigkeit in dem Tank problematisch. Bekannt ist es daher, die Referenzflächen so anzuordnen, dass die Messstrecke zur Bestimmung der Laufgeschwindigkeit in der Ultraschellwelle waagerecht, bevorzugt in der Nähe des Tankbodens, angeordnet ist. Hierdurch kann gewährleistet werden, dass auch bei sehr niedrigen Füllständen eine Laufzeitmessung durchgeführt werden kann. Nachteilig ist, dass die waagerechte Anordnung einer Messstrecke relativ viel Bauraum am Tankboden beansprucht.

Hiervon ausgehend ist es Aufgabe der hier vorliegenden Erfindung, die geschilderten technischen Probleme zu lösen bzw. zumindest zu lindern. Insbesondere soll ein besonders vorteilhaftes Verfahren zur Bestimmung des Füllstands in einem Tank für eine Flüssigkeit mit einem Ultraschallsensor vorgestellt werden.

Diese Aufgaben werden gelöst mit einem Verfahren gemäß den Merkmalen des Anspruchs 1. Weitere vorteilhafte Ausgestaltungen des Verfahrens sind in den abhängig formulierten Ansprüchen angegeben. Die in den Ansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten des Verfahrens aufgezeigt werden.

Die Erfindung betrifft ein Verfahren zur Bestimmung des Füllstands in einem Tank mit einem Ultraschallfüllstandsensor und mindestens zwei Referenzflächen zur Reflektion einer Ultraschallwelle, die von dem Ultraschallfüllstandsensor ausgesendet wird, wobei eine erste Referenzfläche unterhalb einer zweiten Referenzfläche angeordnet ist, aufweisend die folgenden Schritte:
a) Bestimmen einer ersten Ausbreitungsgeschwindigkeit einer Ultraschallwelle in der Flüssigkeit auf einer ersten Messstrecke von dem Ultraschallfüllstandsensor zu der ersten Referenzfläche,
b) Bestimmen einer zweiten Ausbreitungsgeschwindigkeit einer Ultraschallwelle in der Flüssigkeit auf einer zweiten Messstrecke von der ersten Referenzfläche zu der zweiten Referenzfläche,
c) Messen einer Laufzeit einer Ultraschallwelle von dem Ultra-schallfüllstandsensor zu einem Flüssigkeitsspiegel der Flüssigkeit in dem Tank,
d) Auswählen der ersten Ausbreitungsgeschwindigkeit oder der zweiten Ausbreitungsgeschwindigkeit in Abhängigkeit von mindestens einem Auswahlkriterium, und
e) Berechnen eines Füllstands mit der in Schritt c) gemessenen Laufzeit und der in Schritt d) ausgewählten Ausbreitungsgeschwindigkeit.

Der Ultraschallsensor ist vorzugsweise in dem Tankboden oder in der Nähe des Tankbodens angeordnet. Der Ultraschallfüllstandsensor ist vorzugsweise senkrecht nach oben ausgerichtet, so dass Ultraschallwellen von dem Ultraschallfüllstandsensor senkrecht nach oben ausgesendet werden. Die erste Referenzfläche und die zweite Referenzfläche sind vorzugsweise senkrecht oberhalb des Ultraschallfüllstandsensors angeordnet. Der Ultraschallfüllstandsensor weist vorzugsweise eine Sendeeinheit zum Aussenden von Ultraschallwellen und eine Empfangseinheit zum Empfangen von Ultraschallwellen auf, wobei die Empfangseinheit dazu eingerichtet ist, Ultraschallwellen zu empfangen, die von der Sendeeinheit ausgesendet wurden und an einer beliebigen Struktur (Referenzflächen, Flüssigkeitsspiegel im Tank usw.) reflektiert wurden.

Die Verfahrensschritte a), b) und c) werden vorzugsweise wenigstens teilweise zusammen (gleichzeitig) ausgeführt. Besonders bevorzugt sendet der Ultraschallfüllstandsensor ein Signal in Form einer Ultraschallwelle aus. Anschließend empfängt der Ultraschallfüllstandsensor drei reflektierte Antwortsignale, die sich aus der ausgesendeten Ultraschallwelle ergeben. Das erste Signal wird als die Reflektion an der ersten Referenzfläche identifiziert. Mit diesem Signal wird Schritt a) ausgeführt. Die Länge der ersten Messstrecke ist bekannt und aus dem Zeitintervall zwischen dem Aussenden der Ultraschallwelle und dem Empfangen des ersten Antwortsignals kann die erste Ausbreitungsgeschwindigkeit berechnet werden. Das zweite Antwortsignal wird als die Reflektion der Ultraschallwelle an der zweiten Referenzfläche identifiziert. Das erste Antwortsignal und das zweite Antwortsignal werden zur Bestimmung der zweiten Ausbreitungsgeschwindigkeit in Schritt b) verwendet. Mit der Differenz zwischen dem Zeitpunkt des Empfangs des ersten Antwortsignals und dem Zeitpunkt des Empfangs des zweiten Antwortsignals und der (bekannten) Länge der zweiten Messstrecke kann die zweite Ausbreitungsgeschwindigkeit berechnet werden. Das dritte Antwortsignal wird verwendet, um Schritt c) durchzuführen und die Laufzeit der Ultraschallwelle von dem Füllstandsensor zu einem Flüssigkeitsspiegel der Flüssigkeit in dem Tank zu bestimmen. Die Laufzeit ergibt sich aus dem Zeitintervall zwischen dem Aussenden der Ultraschallwelle und dem Empfangen des dritten Antwortsignals.

Gegebenenfalls können die Schritte a), b) und c) auch anders (gemeinsam oder in anderer Reihenfolge) durchgeführt werden. Die hier beschriebene Erläuterung der Schritte a), b) und c) ist lediglich beispielhaft zu verstehen.

Durch das Auswählen der ersten Ausbreitungsgeschwindigkeit oder der zweiten Ausbreitungsgeschwindigkeit in Abhängigkeit von mindestens einem Auswahlkriterium in Schritt d) wird es möglich, den (aktuellen) Füllstand in dem Tank auch dann zu bestimmen, wenn die zweite (obere) Referenzfläche nicht innerhalb der Flüssigkeit in dem Tank angeordnet ist, sondern der Flüssigkeitsspiegel in dem Tank zwischen der ersten Referenzfläche und der zweiten Referenzfläche positioniert ist. Insbesondere sind die Auswahlkriterien so definiert, dass ein Füllstand mit der ersten Ausbreitungsgeschwindigkeit bestimmt wird, wenn der Flüssigkeitsspiegel in dem Tank unterhalb der zweiten Referenzfläche angeordnet ist. Bei höheren Füllständen (oberhalb der zweiten Referenzfläche) wird die zweite Ausbreitungsgeschwindigkeit zur Bestimmung des Füllstands ausgewählt. Die zweite Ausbreitungsgeschwindigkeit hat gegenüber der ersten Ausbreitungsgeschwindigkeit den Vorteil, dass diese erheblich genauer bestimmbar ist. Dies liegt daran, dass der Abstand zwischen der ersten Referenzfläche und der zweiten Referenzfläche wesentlich genauer festgelegt ist, als der Abstand zwischen dem Ultraschallfüllstandsensor und der ersten Referenzfläche. Dies ist insbesondere dadurch bedingt, dass die erste Referenzfläche und die zweite Referenzfläche an einem (gemeinsamen) Kalibrierungsbauteil angeordnet sind. Demgegenüber ist der Ultraschallsensor ein von den Referenzflächen (separates) Bauteil, so dass Toleranzen des Abstands zwischen dem Ultraschallfüllstandsensor und der ersten Referenzfläche ungenauer sind, als Toleranzen des Abstandes zwischen den beiden Referenzflächen. Die erste Ausbreitungsgeschwindigkeit hat gegenüber der zweiten Ausbreitungsgeschwindigkeit den Vorteil, dass diese auch bei Füllständen unterhalb der zweiten Referenzfläche bestimmbar ist.

Das beschriebene Verfahren ermöglicht es, auch niedrige Füllstände in einem Tank zuverlässig zu bestimmen und gleichzeitig eine senkrechte Anordnung des Ultraschallfüllstandsensors im Tank zu gewährleisten. Hierdurch sinkt der Platzbedarf des Füllstandsensors am Tankboden erheblich. Beispielsweise kann der senkrecht angeordnete Ultraschallfüllstandsensor mit den Referenzflächen in einer kleinen Öffnung in einem Tankboden montiert werden. Demgegenüber erfordert ein Ultraschallfüllstandsensor mit waagerecht angeordneten Referenzflächen eine kompliziertere Montage und/oder eine Öffnung im Tankboden, deren Durchmesser mindestens so groß ist, wie die Länge der Messstrecke.

Besonders vorteilhaft ist das Verfahren, wenn der Ultraschallfüllstandsensor außerhalb des Tanks angeordnet ist und eine Ultraschallwelle des Ultraschallfüllstandsensors eine Kopplungsschicht durchläuft, bevor sie in die Flüssigkeit in den Tank eintritt, wobei die Kopplungsschicht eine Tankwand (insbesondere einen Abschnitt der Tankwand) umfasst und die Laufzeit der Ultraschallwelle in der Kopplungsschicht in Schritt a) mit einem Korrekturfaktor berücksichtigt wird.

Der Ultraschallfüllstandsensor ist vorzugsweise außerhalb eines Tankinnenraums auf einer der Flüssigkeit gegenüberliegenden Seite einer Tankwand angeordnet. Vorzugsweise umfasst die Kopplungsschicht zusätzlich zu der Tankwand ein Übertragungsmittel, welches den Ultraschallfüllstandsensor ultraschallleitend an die Tankwand ankoppelt. Das Übertragungsmittel kann beispielsweise eine Leitpaste oder ein Leitpolster umfassen, welches zwischen der Tankwand und dem Ultraschallsensor angeordnet ist. Innerhalb der Kopplungsschicht haben die Ultraschallwellen üblicherweise eine andere Ausbreitungsgeschwindigkeit als in der Flüssigkeit in dem Tank. Weil der Aufbau der Kopplungsschicht bekannt ist, kann die Geschwindigkeit der Ultraschallwellen in der Kopplungsschicht berechnet werden und in Schritt a) als Korrekturfaktor berücksichtigt werden. Der Korrekturfaktor hat vorzugsweise die Dimension einer Zeit. Vorzugsweise wird die Dauer, welche die Ultraschallwellen brauchen, um die Kopplungsschicht zu durchlaufen, experimental ermittelt und in Form des Korrekturfaktors in einem Steuergerät für die Durchführung des beschriebenen Verfahrens hinterlegt.

Weiterhin vorteilhaft ist das Verfahren, wenn beim Auswählen der Ausbreitungsgeschwindigkeit in Schritt d) berücksichtigt wird, welche Ausbreitungsgeschwindigkeit bei einer vorangegangenen Verfahrensiteration ausgewählt war.

Das beschriebene Verfahren wird üblicherweise (während des Betriebs eines Kraftfahrzeugs) iterativ wiederholt, um immer eine aktuelle Information über den Füllstand der Flüssigkeit in dem Tank bereitstellen zu können. Die bei dem Verfahren verwendeten und ermittelten Parameter (insbesondere die ausgewählte Ausbreitungsgeschwindigkeit) werden jeweils in einem Steuergerät des Kraftfahrzeugs hinterlegt. Daher ist es möglich, bei einer Verfahrensiteration auf Parameter zurückzugreifen, die während einer vorangegangenen Verfahrensiteration ermittelt wurden. Die Information über die ausgewählte Ausbreitungsgeschwindigkeit bei einer vorangegangenen Verfahrensiteration kann in Schritt c) zusätzlich zu dem mindestens einen Auswahlkriterium verwendet werden, um eine der Ausbreitungsgeschwindigkeiten auszuwählen. Beispielsweise kann die Möglichkeit eines Wechsels der ausgewählten Ausbreitungsgeschwindigkeit in Schritt d) deaktiviert werden, wenn bestimmte Bedingungen vorliegen. Mit einem Wechsel der ausgewählten Ausbreitungsgeschwindigkeit ist hier gemeint, dass bei der Durchführung des Verfahrens eine andere (erste oder zweite) Ausbreitungsgeschwindigkeit ausgewählt wird, als bei einer vorangegangenen Verfahrensiteration. Beispielsweise kann grundsätzlich ein Wechsel von der Auswahl der ersten Ausbreitungsgeschwindigkeit (zurück) zu der Auswahl der zweiten Ausbreitungsgeschwindigkeit verhindert werden. Dies bedeutet, dass bei einem einmaligen Auswählen der ersten Ausbreitungsgeschwindigkeit ein Zurückspringen des Verfahrens in eine darauffolgende Verfahrensiteration zu der ersten Ausbreitungsgeschwindigkeit nicht möglich ist. Wenn zusätzliche Bedingungen erfüllt sind, kann der Wechsel (zurück) zu der Auswahl der zweiten Ausbreitungsgeschwindigkeit wieder ermöglicht werden.

Beispielsweise ist denkbar, dass in Schritt d) die erste Ausbreitungsgeschwindigkeit ausgewählt wird, weil das mindestens eine Auswahlkriterium erkennen lässt, dass der Füllstand in dem Tank unter die zweite Referenzfläche gesunken ist. Wenn dies erstmalig der Fall ist, wird die Auswahl der ersten Ausbreitungsgeschwindigkeit in einem Speicher hinterlegt. Vorzugsweise bleibt die erste Ausbreitungsgeschwindigkeit dann ausgewählt, so lange solange keine Wiederbefüllung des Tanks erfolgt ist. Selbst wenn das mindestens eine Auswahlkriterium eigentlich einen Wechsel zurück zu der zweiten Ausbreitungsgeschwindigkeit vorgeben würde, bleibt die erste Ausbreitungsgeschwindigkeit ausgewählt.

Weiterhin vorteilhaft ist das Verfahren, wenn als erstes Auswahlkriterium in Schritt e) ein berechneter Füllstand verwendet wird, wobei bei einem Füllstand unterhalb eines Füllstandsgrenzwerts die erste Ausbreitungsgeschwindigkeit ausgewählt wird und bei einem Füllstand oberhalb eines Füllstandsgrenzwerts die zweite Ausbreitungsgeschwindigkeit ausgewählt wird.

Der Füllstandsgrenzwert ist vorzugsweise so angeordnet, dass bei Füllständen oberhalb des Füllstandsgrenzwerts beide Referenzflächen (sicher) innerhalb der Flüssigkeit angeordnet sind, so dass die Bestimmung der zweiten Ausbreitungsgeschwindigkeit auf der zweiten Messstrecke zwischen den beiden Referenzflächen unproblematisch möglich ist. Der Füllstandsgrenzwert ist dementsprechend vorzugsweise auf Höhe der zweiten Referenzfläche, bzw. knapp oberhalb der zweiten Referenzfläche festgelegt. Bei Füllständen unterhalb des Füllstandsgrenzwerts erfolgt die Berechnung des Füllstands vorzugsweise mit der zweiten Ausbreitungsgeschwindigkeit, so dass die weitere Absenkung des Füllstands die Füllstandsbestimmung nicht beeinflusst.

Weiterhin vorteilhaft ist das Verfahren, wenn als zweites Auswahlkriterium in Schritt d) ein Vergleich zwischen der ersten Ausbreitungsgeschwindigkeit und der zweiten Ausbreitungsgeschwindigkeit durchgeführt wird, wobei die erste Ausbreitungsgeschwindigkeit gewählt wird, wenn eine Geschwindigkeitsabweichung zwischen der ersten Ausbreitungsgeschwindigkeit und der zweiten Ausbreitungsgeschwindigkeit einen Grenzwert überschreitet.

Weiter oben wurde beschrieben, dass die erste Ausbreitungsgeschwindigkeit, die zweite Ausbreitungsgeschwindigkeit und die Laufzeit jeweils anhand von drei Antwortsignalen bestimmt werden, die nacheinander an einer Empfangseinheit des Ultraschallfüllstandsensors als Antwort auf eine ausgesendete Ultraschallwelle eingehen. Wenn der Flüssigkeitsspiegel unter die zweite Referenzfläche sinkt, werden an der zweiten Referenzfläche keine Ultraschallwellen mehr reflektiert, weil sämtliche Ultraschallwellen bereits an dem Flüssigkeitsspiegel reflektiert werden. Die zweite Referenzfläche ist also für den Ultraschallfüllstandsensor nicht sichtbar. Stattdessen wird der Flüssigkeitsspiegel als zweite Referenzfläche angesehen, weil dieser nach der ersten Referenzfläche das zweite Antwortsignal auf die ausgesendete Ultraschallwelle erzeugt. Bei Füllständen unterhalb der zweiten Referenzfläche verkürzt sich demnach die mit dem Füllstandsensor festgestellte Laufzeit zwischen einem Antwortsignal, welches der ersten Referenzfläche entspricht und dem einen zweiten Antwortsignal, welches von dem Ultraschallsensor als zur zweiten Referenzfläche zugehörig interpretiert wird. Hierdurch treten bei Füllständen unterhalb der zweiten Referenzfläche Abweichungen zwischen der in Schritt b) bestimmten zweiten Ausbreitungsgeschwindigkeit und der in Schritt a) bestimmten ersten Ausbreitungsgeschwindigkeit auf. Aufgrund von Ungenauigkeiten bei den Geschwindigkeitsmessungen in den Schritten a) und b) können zwar auch bei Füllständen oberhalb der zweiten Referenzfläche Geschwindigkeitsabweichungen zwischen den beiden Ausbreitungsgeschwindigkeiten auftreten. Diese Geschwindigkeitsunterschiede sind aber relativ klein. Vorzugsweise ist der Grenzwert so definiert, dass nur Geschwindigkeitsunterschiede erfasst werden, die durch ein Absinken des Füllstandes unter die zweite Referenzfläche begründet sind.

Wenn der Flüssigkeitsspiegel unter die zweite Referenzfläche gesunken ist, ist regelmäßig auch eine angepasste Vorgehensweise für Schritt c) erforderlich. Insbesondere ist es nicht mehr möglich, ein drittes Antwortsignal auf eine ausgesendete Ultraschallwelle zur Bestimmung der Laufzeit zu verwenden. Vielmehr sollte ein zweites Antwortsignal zur Bestimmung der Laufzeit zu dem Flüssigkeitsspiegel verwendet werden, weil die Reflektion der Ultraschallwelle an dem Flüssigkeitsspiegel typischerweise als zweites Antwortsignal von dem Ultraschallfüllstandsensor empfangen wird, wenn der Flüssigkeitsspiegel unterhalb der zweiten Referenzfläche liegt.

Das erste Auswahlkriterium und das zweite Auswahlkriterium werden vorzugsweise beide genutzt, um von der ersten Ausbreitungsgeschwindigkeit zu der zweiten Ausbreitungsgeschwindigkeit zu wechseln. Besonders bevorzugt müssen beide Auswahlkriterien einen entsprechenden Wechsel der Ausbreitungsgeschwindigkeit vorgeben, damit dieser Wechsel in Schritt d) auch tatsächlich erfolgt.

Für einen Wechsel von der ersten Ausbreitungsgeschwindigkeit (zurück) zu der zweiten Ausbreitungsgeschwindigkeit ist es vorzugsweise erforderlich, dass zusätzlich noch ein weiteres, im Folgenden erläutertes (drittes) Auswahlkriterium einen entsprechenden Wechsel vorgibt.

Besonders vorteilhaft ist das Verfahren, wenn als drittes Auswahlkriterium in Schritt d) die in Schritt c) gemessene Laufzeit geprüft wird, wobei die zweite Ausbreitungsgeschwindigkeit nicht ausgewählt wird, wenn die gemessene Laufzeit außerhalb eines Zeitintervalls liegt, welches der doppelten Laufzeit zu der zweiten Referenzfläche entspricht und bei einer vorangegangenen Verfahrensiteration die erste Ausbreitungsgeschwindigkeit ausgewählt war.

Weiter vorne wurde beschrieben, dass zur Bestimmung der ersten Ausbreitungsgeschwindigkeit, der zweiten Ausbreitungsgeschwindigkeit und der Laufzeit jeweils drei Antwortsignale auf eine vom Ultraschallfüllstandsensor ausgesendete Ultraschallwelle herangezogen werden können. Im Zusammenhang mit dem zweiten Auswahlkriterium wurde erläutert, dass die zweite Referenzfläche gegebenenfalls für den Ultraschallsensor nicht sichtbar ist, wenn sich der Flüssigkeitsspiegel unterhalb der zweiten Referenzfläche befindet, weil in diesem Fall der Flüssigkeitsspiegel das zweite Antwortsignal erzeugt und die Ultraschallwellen vollständig reflektiert. Trotzdem ergibt sich in diesem Fall auch ein drittes Antwortsignal, welches fälschlicherweise als Flüssigkeitsspiegel interpretiert werden kann. Dieses dritte Antwortsignal ergibt sich durch eine mehrfache Reflektion der Ultraschallwelle innerhalb des Tanks. Es hat sich herausgestellt, dass ein besonders starkes Antwortsignal durch eine Ultraschallwelle erzeugt wird, die zunächst am Flüssigkeitsspiegel, dann am Tankboden und anschließend wieder am Flüssigkeitsspiegel reflektiert wird, bevor sie zurück zum Ultraschallfüllstandsensor gelangt. Die Ultraschallwelle des dritten Antwortsignals durchläuft damit den Weg von dem Ultraschallfüllstandsensor zum Flüssigkeitsspiegel genau viermal anstatt genau zweimal. Hierdurch ergibt sich genau die doppelte Laufzeit der Laufzeit des zweiten Antwortsignals (von der zweiten Referenzfläche) . Das Zeitintervall ist so definiert, dass es Laufzeiten zu dem Flüssigkeitsspiegel bzw. dritte Antwortsignale erkennt, die der doppelten Laufzeit zu der zweiten Referenzfläche entsprechen. Das Zeitintervall deckt vorzugsweise die genannte doppelte Laufzeit mit einer Toleranz von zwischen 5 % und 10 % ab, so dass auch Messungenauigkeiten miterfasst werden. Wenn ein Füllstand auf Basis der zweiten Ausbreitungsgeschwindigkeit berechnet werden würde, und gleichzeitig das dritte Antwortsignal fehlerhaft als Laufzeit zum Flüssigkeitsspiegel interpretiert werden würde, ergäbe Schritt e) einen berechneten Füllstand, der dem doppelten tatsächlichen Füllstand in dem Tank entsprechen würde. Um dieses fehlerhafte Ergebnis des Verfahrens sicher zu vermeiden, fängt das dritte Auswahlkriterium entsprechende Fälle ab.

Das dritte Auswahlkriterium wird nur bei einem Wechsel von der ersten Ausbreitungsgeschwindigkeit zu der zweiten Ausbreitungsgeschwindigkeit verwendet. Das dritte Auswahlkriterium kann somit auch als zusätzliches Kontrollkriterium bezeichnet werden.

Außerdem ist das Verfahren vorteilhaft, wenn bei der Berechnung des Füllstandes in Schritt e) folgende Unterschritte angewendet werden:
i) Berechnen des Füllstandes auf Basis der ausgewählten Ausbreitungsgeschwindigkeit;
ii) Prüfen ob ein mit der zweiten Ausbreitungsgeschwindigkeit ermittelter Füllstand der doppelten Höhe der zweiten Referenzfläche entspricht.
iii) Ermitteln einer Fluktuation eines zweiten Antwortsignals der zweiten Referenzfläche am Ultraschallfüllstandssensor in einem Zeitintervall;
iv) Prüfen, ob die Fluktuation des zweiten Antwortsignals einen vorgegebenen Grenzwert überschreitet; und
v) Korrektur des in Schritt i) berechneten Füllstandes auf die Höhe der zweiten Referenzfläche (2), wenn die Schritte ii) und iv) erfüllt sind

Das in Schritt iii) verwendete zweite Antwortsignal am Ultraschallfüllstandsensor ist vorzugsweise der zweiten Referenzfläche zuzuordnen, während ein erstes Antwortsignal der ersten Referenzfläche und ein drittes Antwortsignal dem Flüssigkeitsspiegel in dem Tank zuzuordnen ist.

Wie bereits weiter oben erläutert, entspricht das dritte Antwortsignal allerdings gegebenenfalls einer doppelten Reflektion der Ultraschallwellen an dem Flüssigkeitsspiegel, wenn der Flüssigkeitsspiegel bzw. der Füllstand auf Höhe der zweiten Referenzfläche liegt. Die Möglichkeit, dass diese Situation vorliegt wird in Unterschritt ii) identifiziert. Anhand von Unterschritt ii) kann diese Situation allerdings nicht davon unterschieden werden, dass der Füllstand tatsächlich auf der doppelten Höhe der zweiten Referenzfläche liegt. Dies wird durch die Unterschritte iii) und iv) möglich. Fluktuationen des zweiten Antwortsignals in Unterschritt iii) werden durch Vibrationen und/oder Schwappbewegungen der Flüssigkeit im Tank ausgelöst, wenn der Füllstand auf Höhe der zweiten Referenzfläche liegt. Dies liegt daran, dass die zweite Referenzfläche bei Schwappbewegungen dann zumindest auch kurzzeitig oberhalb des Flüssigkeitsspiegels liegt und der Flüssigkeitsspiegel damit das zweite Antwortsignal verursacht. Dies kann nicht auftreten, wenn der Füllstand der doppelten Höhe der zweiten Referenzfläche entspricht. Dann ist die zweite Referenzfläche immer und sicher vollständig von Flüssigkeit bedeckt und das zweite Antwortsignal ist dementsprechend konstant. Durch eine Beobachtung der Fluktuation des zweiten Antwortsignals in einem Zeitintervall und durch einen Vergleich der beobachteten (und gegebenenfalls über die Zeit gemittelten) Fluktuation kann damit unterschieden werden, ob der Füllstand tatsächlich der doppelten Höhe der zweiten Referenzfläche entspricht oder ob eine doppelte Reflektion der Ultraschallwelle an der Flüssigkeitsoberfläche erfolgt (Unterschritte iii) und iv)).

Weiterhin vorteilhaft ist das Verfahren, wenn in Schritt d) ein Wechsel von der ersten Ausbreitungsgeschwindigkeit zu der zweiten Ausbreitungsgeschwindigkeit nur erfolgt, wenn ein stationärer Modus vorliegt.

Ein stationärer Modus ist dadurch gekennzeichnet, dass ein Kraftfahrzeug, in welchem das Verfahren durchgeführt wird (zwischenzeitlich) deaktiviert war oder deaktiviert ist. Das Gegenteil von dem stationären Modus ist ein dynamischer Modus, in welchem das Kraftfahrzeug (durchgehend) aktiviert war bzw. aktiviert ist. Die Unterscheidung zwischen einem stationären Modus und einem dynamischen Modus kann in einer Modusprüfung erfolgen. Wenn ein stationärer Modus vorliegt, ist es möglich, dass der Tank wiederbefüllt wurde, weil das Wiederbefüllen des Tanks regelmäßig erfordert, dass das Kraftfahrzeug (zumindest kurzzeitig) deaktiviert war bzw. stillstand. Wenn der stationäre Modus vorliegt, ist es also (prinzipiell) möglich, dass der Flüssigkeitsspiegel in dem Tank sich erhöht hat. Dementsprechend ist ein Wechsel zurück zur zweiten Ausbreitungsgeschwindigkeit (vorzugsweise) nur dann möglich, wenn ein stationärer Modus vorliegt oder zumindest vorgelegen hat. In einem dynamischen Modus während des Betriebs eines Kraftfahrzeugs ist davon auszugehen, dass eine Erhöhung des Flüssigkeitsspiegels auf einen Wert oberhalb der zweiten Referenzfläche durch ein Schwappen der Flüssigkeit in dem Tank, durch eine Schräglage des Tanks oder Ähnliches verursacht wurde. Dementsprechend ist ein Wechsel zurück zur zweiten Ausbreitungsgeschwindigkeit dann nicht sinnvoll.

Die Unterscheidung zwischen einem statischen Modus und einem dynamischen Modus ist insbesondere im Zusammenhang mit den Unterschritten i) bis v) des Schritts e) sinnvoll. Fluktuationen, die im Rahmen der Unterschritte iii) und iv) ausgewertet werden können treten regelmäßig nur im dynamischen Modus auf, weil im statischen Modus keine ausreichenden Schwappbewegungen und/oder Vibrationen des Flüssigkeitsspiegels auftreten, die zu einer Unterscheidung von Füllständen auf Höhe der zweiten Referenzfläche und auf doppelter Höhe der zweiten Referenzfläche notwendig sind. Die Unterschritte i) bis v) können daher nur im dynamischen Modus so angewendet werden und müssen für einen statischen Modus angepasst werden. Gegebenenfalls ist im statischen Modus dann auf, in einem Speicher hinterlegte, Füllstandsinformationen zurückzugreifen.

Weiterhin vorteilhaft ist das Verfahren, wenn ein Eingangssignal des in Schritt d) verwendeten mindestens einen Auswahlkriteriums mit einem Tiefpassfilter gefiltert wird.

Ein Eingangssignal des mindestens einen Auswahlkriteriums ist beispielsweise ein in Schritt e) berechneter Füllstand beim ersten Auswahlkriterium und beim dritten Auswahlkriterium oder eine Geschwindigkeitsabweichung beim zweiten Auswahlkriterium. Das zu filternde Eingangssignal kann bspw. auch eine Laufzeit der Ultraschallwelle sein. Ein Tiefpassfilter hat die Eigenschaften, dass kurzfristige schwankende Veränderungen des Auswahlkriteriums herausgefiltert werden. Durch einen Tiefpassfilter kann beispielsweise verhindert werden, dass Schwappbewegungen der Flüssigkeit in dem Tank das mindestens eine Auswahlkriterium beeinflussen.

Weiterhin vorteilhaft ist das Verfahren, wenn ein Eingangssignal des in Schritt d) verwendeten mindestens eine Auswahlkriteriums mit einer Hysterese gefiltert wird.

Durch eine Filterung eines Eingangssignals mit einer Hysterese können schnelle Wechsel der ausgewählten Ausbreitungsgeschwindigkeit wirkungsvoll verhindert werden.

Hier auch beschrieben werden soll ein Kraftfahrzeug mit einem Tank für eine Betriebsflüssigkeit aufweisend einen Ultraschallfüllstandsensor zur Bestimmung des Füllstands in dem Tank und mindestens zwei Referenzflächen zur Reflektion einer Ultraschallwelle, die von dem Ultraschallfüllstandsensor ausgesendet wird, wobei eine erste Referenzfläche unterhalb einer zweiten Referenzfläche angeordnet ist und mit mindestens einem Steuergerät, welches zur Füllstandsbestimmung zur Durchführung des beschriebenen Verfahrens eingerichtet ist.

Die im Zusammenhang mit dem beschriebenen Verfahren geschilderten besonderen Vorteile und Ausgestaltungsmerkmale sind in analoger Weise auf das Kraftfahrzeug und den Ultraschallfüllstandsensor (als Vorrichtung) übertragbar.

Das Steuergerät kann ein dem Ultraschallfüllstandsensor zugeordnetes Steuergerät in einer Vorrichtung zur Förderung und Bereitstellung von flüssigem Additiv sein. Das Steuergerät kann auch Bestandteil eines Kraftfahrzeugsteuergeräts sein, in welchem zur Durchführung des beschriebenen Verfahrens eine Software hinterlegt ist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und die in den Figuren dargestellten Größenverhältnisse nur schematisch sind. Es zeigen:
- Fig. 1:: einen Tank mit einem beschriebenen Ultraschallfüllstandsensor,
- Fig. 2:: ein Bauteil zur Bereitstellung von Referenzflächen,
- Fig. 3:: eine Anordnung eines Bauteils mit Referenzflächen an einem Ultraschallfüllstandsensor,
- Fig. 4:: ein Diagramm der von einem Ultraschallfüllstandsensor ausgesendeten Ultraschallwellen und deren Reflektionen,
- Fig. 5:: ein Ablaufdiagramm des beschriebenen Verfahrens,
- Fig. 6:: ein logisches Schaltdiagramm des beschriebenen Verfahrens,
- Fig. 7:: ein erstes Auswahlkriterium,
- Fig. 8:: ein zweites Auswahlkriterium,
- Fig. 9:: ein drittes Auswahlkriterium,
- Fig. 10a: bis Fig. 10d: Diagramme von Antwortsignalen am Ultraschalfüllstandsensor unter unterschiedlichen Bedingungen, und
- Fig. 11:: ein Kraftfahrzeug aufweisend einen Tank und einen Ultraschallfüllstandsensor, der nach dem beschriebenen Verfahren betrieben werden kann.

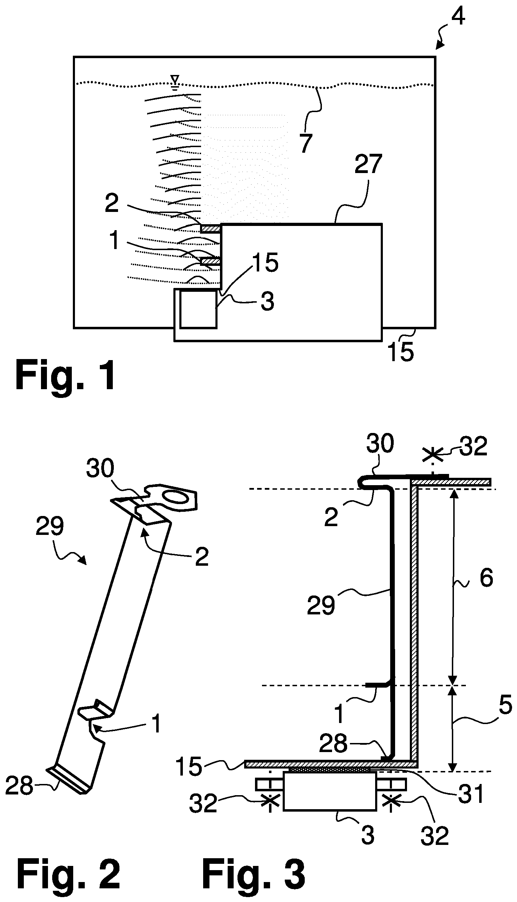

Fig. 1 zeigt einen Tank 4, wobei im Bereich eines Tankbodens des Tanks eine Entnahmeeinheit 27 in die Tankwand 15 des Tanks 4 integriert ist. Mit der Entnahmeeinheit 27 kann Flüssigkeit aus dem Tank 4 entnommen werden und beispielsweise einer (hier nicht dargestellten) Abgasbehandlungsvorrichtung bereitgestellt werden. Das Gehäuse der Entnahmeeinheit 27 bildet zumindest abschnittsweise die Tankwand 15. In der Entnahmeeinheit 27 ist ein Ultraschallfüllstandsensor 3 angeordnet. Oberhalb des Ultraschallfüllstandsensors 3 befinden sich eine erste Referenzfläche 1 und eine zweite Referenzfläche 2. Die Flüssigkeit in dem Tank bildet einen Flüssigkeitsspiegel 7, bis zu welchem sich die Flüssigkeit in dem Tank 4 (nach oben) erstreckt.

Fig. 2 zeigt ein Kalibrierungsbauteil 29, welches zur Bereitstellung der ersten Referenzfläche 1 und der zweiten Referenzfläche 2 in den Tank integriert werden kann. Das Kalibrierungsbauteil 29 besteht vorzugsweise aus Metall und lässt sich daher unter genauer Einhaltung von Toleranzen für die Abstände und Positionen der ersten Referenzfläche 1 und der zweiten Referenzfläche 2 herstellen. Das Kalibrierungsbauteil 29 hat vorzugsweise eine Anlagefläche 28, welche in der Nähe des Ultraschallfüllstandsensors (an der Tankwand 15) anliegen kann und damit die genaue Positionierung des Kalibrierungsbauteils 29 vorgibt. Vorzugsweise hat das Kalibrierungsbauteil 29 darüber hinaus einen Federabschnitt 30, welcher dafür sorgt, dass das Kalibrierungsbauteil 29 mit der Anlagefläche 28 präzise in einer vorgegebenen Position an der Tankwand 15 anliegt. Hierdurch sind Lage und Ausrichtung der ersten Referenzfläche 1 und der zweiten Referenzfläche 2 relativ zu dem Ultraschallfüllstandsensor 3 genau vorgegeben.

In Fig. 3 ist zu erkennen, wie das Kalibrierungsbauteil 29 an einer Tankwand 15 des Tanks 4 angeordnet sein kann. Das Kalibrierungsbauteil 29 ist vorzugsweise mit mindestens einer Schraube 32 an der Tankwand 15 befestigt. Durch den Federabschnitt 30 wird die Anlagefläche 28 des Kalibrierungsbauteils 29 fest an eine vorgegebene Stelle der Tankwand 15 gedrückt. Gegenüberliegend zu dem Kalibrierungsbauteil 29 ist an der Tankwand 15 der Ultraschallfüllstandsensor 3 angeordnet und hier beispielhaft ebenfalls mit mindestens einer Schraube 32 befestigt. Durch die Positionierung des Ultraschallfüllstandsensors 3 und des Kalibrierungsbauteils 29 wird eine erste Messstrecke 5 von dem Ultraschallfüllstandsensor zu der ersten Referenzfläche 1 und eine zweite Messstrecke 6 von der zweiten Referenzfläche 2 zu der ersten Referenzfläche 1 definiert.

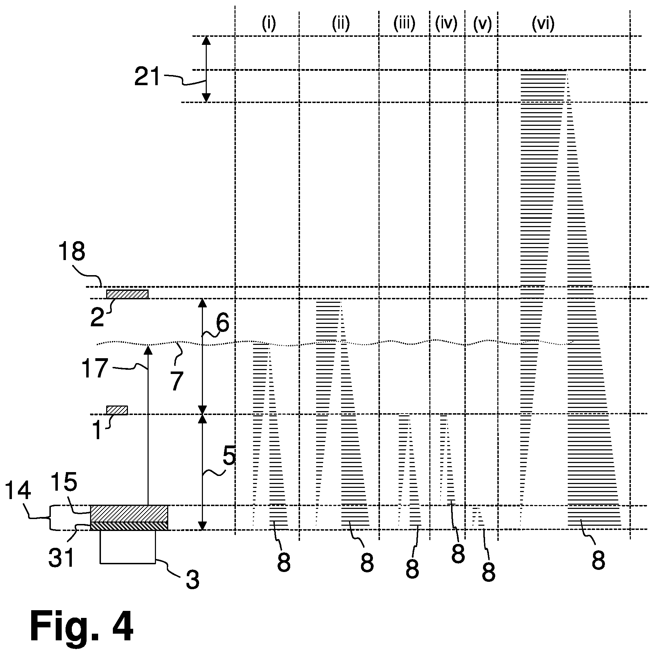

Fig. 4 verdeutlicht verschiedene Laufzeiten 8 von Ultraschallwellen bzw. Antwortsignalen, die von dem Ultraschallfüllstandsensors ausgesendet und von Strukturen in dem Tank (beispielsweise von der ersten Referenzfläche 1 oder von der zweiten Referenzfläche 2) reflektiert werden. Zum besseren Verständnis zeigt Fig. 4 teilweise strukturelle Merkmale (bspw. den Ultraschallfüllstandsensor 3) und ist teilweise nach Art eines Diagramms aufgebaut. Fig. 4 zeigt unten links den Ultraschallfüllstandsensor 3. In der Fig. 4 außerdem zu erkennen sind die Tankwand 15, die erste Referenzfläche 1, die zweite Referenzfläche 2 und ein Übertragungsmittel 31, welches Ultraschallwellen von dem Ultraschallfüllstandsensor 3 auf die Tankwand 15 überträgt. Das Übertragungsmittel 31 kann beispielsweise eine Übertragungspaste oder ein Übertragungspolster sein und bildet zusammen mit der Tankwand 15 eine Kopplungsschicht 14, durch welche Ultraschallwellen von dem Ultraschallfüllstandsensor 3 in den hier nicht dargestellten Tank eingeleitet werden. Von dem Ultraschallfüllstandsensor 3 zu der ersten Referenzfläche 1 ist eine erste Messstrecke 5 definiert. Von der ersten Referenzfläche 1 zu der zweiten Referenzfläche 2 ist eine zweite Messstrecke 6 definiert. In der Fig. 4 sind außerdem noch ein Flüssigkeitsspiegel 7 in dem hier nicht dargestellten Tank und der sich daraus ergebende Füllstand 17 in dem Tank dargestellt. Mit (i) ist eine Laufzeit 8 einer Ultraschallwelle von dem Ultraschallfüllstandsensor 3 zu dem Flüssigkeitsspiegel 7 und zurück zu dem Ultraschallfüllstandsensor 3 gekennzeichnet. (ii) verdeutlich eine Laufzeit 8, die sich aufgrund einer Reflektion von Ultraschallwellen an der zweiten Referenzfläche 2 ergibt. (iii) zeigt eine Laufzeit 8, die sich aus der ersten Referenzfläche 1 ergibt. Die mit (iii) gekennzeichnete Laufzeit 8 kann in eine Laufzeit (iv) und eine Laufzeit (v) unterteilt werden. Diese beiden Laufzeiten 8 ergeben zusammen die Laufzeit 8 gemäß (iii). Dabei kennzeichnet (v) die Laufzeit 8 durch die Kopplungsschicht 14 und (iv) die Laufzeit 8 durch die Flüssigkeit von Tankwand 15 bis hin zur ersten Referenzfläche 1. (vi) kennzeichnet eine (fiktive) Laufzeit 8 von dem Ultraschallfüllstandsensor 3 zu einem (fiktiven) Flüssigkeitsspiegel, welcher sich auf doppelter Höhe der Höhe der zweiten Referenzfläche 2 befindet. Die mit (vi) gekennzeichnete Laufzeit 8 ergibt sich normalerweise nicht durch einen Flüssigkeitsspiegel auf dieser Höhe, sondern durch eine doppelte Reflektion von Ultraschallwellen an dem Flüssigkeitsspiegel und an einem Tankboden. (vi) illustriert somit einen fiktiven, tatsächlich nicht vorliegenden Zustand, der bei falscher Interpretation der von dem Ultraschallfüllstandsensor empfangenen Antwortsignale erkannt wird. Im Bereich der mit (vi) gekennzeichneten Laufzeit 8 ist ein Zeitintervall 21 definiert, wobei die Laufzeiten 8, die im Bereich dieses Zeitintervalls 21 liegen, im Rahmen des dritten Auswahlkriteriums berücksichtigt werden, um zu entscheiden, ob ein Wechsel zurück zur zweiten Ausbreitungsgeschwindigkeit erfolgen soll.

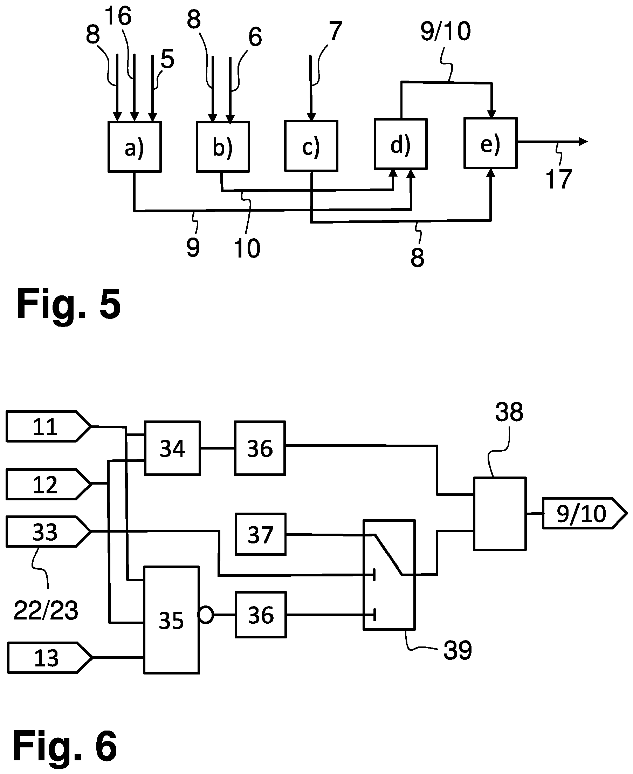

Fig. 5 zeigt ein Ablaufdiagramm des beschriebenen Verfahrens. Zu erkennen sind die Verfahrensschritte a), b), c), d) und e). Im Verfahrensschritt a) werden zur Bestimmung der ersten Ausbreitungsgeschwindigkeit die Laufzeit 8 zu der ersten Referenzfläche, der beschriebene Korrekturfaktor 16 für die Kopplungsschicht und die erste Messstrecke 5 berücksichtigt. Selbstverständlich können auch weitere Parameter und/oder Signale hier berücksichtigt werden. In Schritt b) werden zur Bestimmung der zweiten Ausbreitungsgeschwindigkeit 10 die entsprechende Laufzeit 8 und die zweite Messstrecke 6 berücksichtigt. Auch hier ist die Berücksichtigung noch weiterer Parameter möglich. In Schritt c) wird die dem Flüssigkeitsspiegel 7 zuzuordnende Laufzeit 8 bestimmt. In Schritt d) erfolgt eine Auswahl der ersten Ausbreitungsgeschwindigkeit 9 oder der zweiten Ausbreitungsgeschwindigkeit 10. Die ausgewählte Ausbreitungsgeschwindigkeit 9/10 wird zusammen mit der Laufzeit 8 zum Flüssigkeitsspiegel 7 in Schritt e) verwendet, um den Füllstand 17 zu berechnen.

Fig. 6 zeigt ein logisches Schaltdiagramm, welches die Verknüpfung der einzelnen Auswahlkriterien 11, 12 und 13 zur Auswahl der ersten Ausbreitungsgeschwindigkeit 9 oder der zweiten Ausbreitungsgeschwindigkeit 10 erläutert. Die Auswahl der Ausbreitungsgeschwindigkeit 9, 10 erfolgt im Wahlmodul 38. Zur Auswahl der ersten Ausbreitungsgeschwindigkeit 9 ist es erforderlich, dass sowohl das erste Auswahlkriterium 11 als auch das zweite Auswahlkriterium 12 eine entsprechende Auswahl indizieren. Dazu werden diese beiden Auswahlkriterien 11, 12 in einem ersten Kriterienkombinierer 34 durch eine AND-Verknüpfung miteinander verknüpft. Der Ausgang des ersten Kriterienkombinierers 34 wird noch mit einem Integrator 36 gefiltert. Durch einen Integrator 36 wird sichergestellt, dass der erste Kriterienkombinierer 34 für ein vorgegebenes Mindestzeitintervall einen Wechsel zu der ersten Ausbreitungsgeschwindigkeit 9 vorgibt, bevor dem Wahlmodul 38 eine entsprechende Vorgabe gemacht wird. Zur Auswahl der zweiten Ausbreitungsgeschwindigkeit 10 ist es erforderlich, dass das erste Auswahlkriterium 11 und das zweite Auswahlkriterium 12 sowie ein zusätzliches drittes Auswahlkriterium 13 eine Auswahl der zweiten Ausbreitungsgeschwindigkeit 10 vorgeben. Dazu werden die drei Auswahlkriterien 11, 12 und 13 in einem zweiten Kriterienkombinierer 35 miteinander nach Art einer NAND-Verknüpfung erfüllt. Die NAND-Verknüpfung besagt, dass keines der drei Auswahlkriterien 11, 12, 13 die Auswahl der ersten Ausbreitungsgeschwindigkeit 9 vorgeben darf, damit die zweite Ausbreitungsgeschwindigkeit 10 ausgewählt wird. Auch der Ausgang des zweiten Kriterienkombinierers 35 wird mit einem Integrator 36 gefiltert, um sicherzustellen, dass die Auswahl der zweiten Ausbreitungsgeschwindigkeit 10 zumindest für ein Mindestzeitintervall vorgegeben wird. Der Ausgang des zweiten Kriterienkombinierers 35 durchläuft zusätzlich ein Schaltmodul 39, bevor er zu dem Wahlmodul 38 gelangt. Durch das Schaltmodul 39 kann die Auswahl der zweiten Ausbreitungsgeschwindigkeit 10 verhindert werden, wenn eine Modusprüfung 33 einen dynamischen Modus 23 feststellt. Das Schaltmodul 39 gibt die Auswahl der zweiten Ausbreitungsgeschwindigkeit 10 nur frei, wenn ein stationärer Modus 22 vorliegt. Ansonsten wird der entsprechende Eingang des Wahlmoduls 38 mit einer Deaktivierung 37 verbunden.

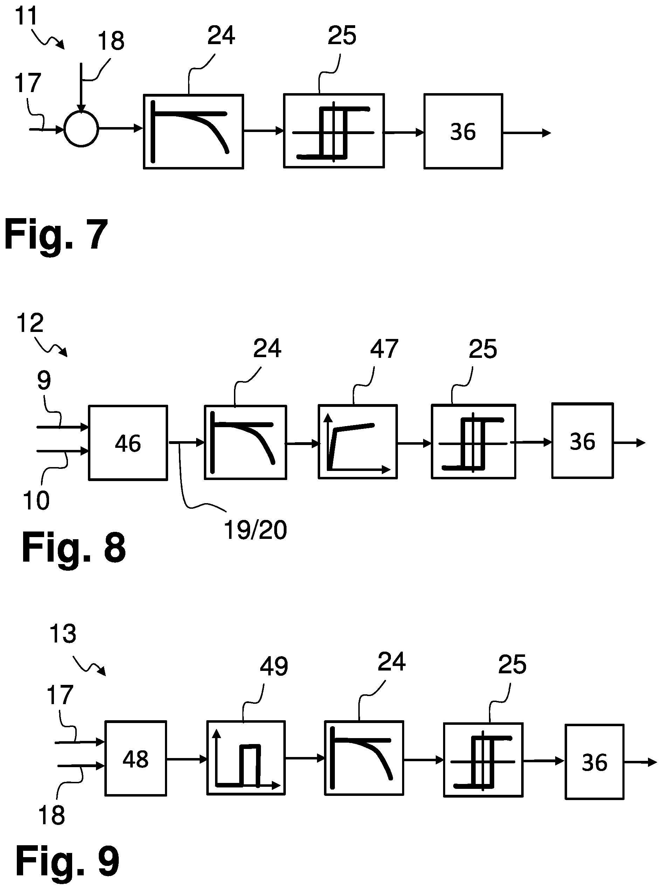

Fig. 7 zeigt ein Ablaufdiagramm des ersten Auswahlkriteriums 11. Zu erkennen ist, dass ein Füllstand 17 als Eingangssignal verwendet wird. Der Füllstand 17 wird mit einem Tiefpassfilter 24 und einer Hysterese 25 gefiltert, und dann mit einem Integrator 36 behandelt. Durch den Integrator 36 kann sichergestellt werden, dass das erste Auswahlkriterium für einen vorgegebenen Zeitraum erfüllt sein muss, um ein Umschalten in Schritt d) zwischen den Ausbreitungsgeschwindigkeiten zu bewirken. Das gefilterte Eingangssignal für den Füllstand wird anschließend mit einem Füllstandsgrenzwert verglichen.

In Fig. 8 ist das zweite Auswahlkriterium 12 zu erkennen. Hier werden die erste Ausbreitungsgeschwindigkeit 9 und die zweite Ausbreitungsgeschwindigkeit 10 mit einem Geschwindigkeitsvergleicher 46 verglichen. Das sich hieraus ergebende Signal wird zunächst von einem Tiefpassfilter 24 gefiltert. Anschließend wird auf das Signal eine Unschärfelogik 47 angewendet. Durch die Unschärfelogik 47 werden kleine, dauerhaft auftretende Abweichungen zwischen den Geschwindigkeiten verstärkt. Die Unschärfelogik 47 verbessert damit die Erkennung von Geschwindigkeitsabweichungen, die durch ein Absinken des Flüssigkeitsspiegels verursacht worden sind. Nach der Unschärfelogik 47 wird eine Hysterese 25 auf das Signal angewendet. Anschließend erfolgt noch die Anwendung eines Integrators 36 , um nur über längere Zeiträume hinweg stattfindende Abweichungen zwischen der ersten Ausbreitungsgeschwindigkeit 9 und der zweiten Ausbreitungsgeschwindigkeit 10 zu erfassen.

Fig. 9 zeigt das dritte Auswahlkriterium des beschriebenen Verfahrens. In dieses Auswahlkriterium fließt der Füllstand 17 ein. Dieser Füllstand 17 wird zunächst mit dem der zweiten Referenzfläche entsprechenden Füllstand in einem Füllstandsvergleicher 48 verglichen. Anschließend wird eine digitale Abbildungsfunktion 49 angewendet, mit der erkennbar ist, ob der Füllstand der doppelten Höhe der zweiten Referenzfläche entsprechend entspricht. Auf das Ausgangssignal der digitalen Abbildungsfunktion 49 werden ein Tiefpassfilter 24 und eine Hysterese 25 sowie in Integrator 36 angewendet.

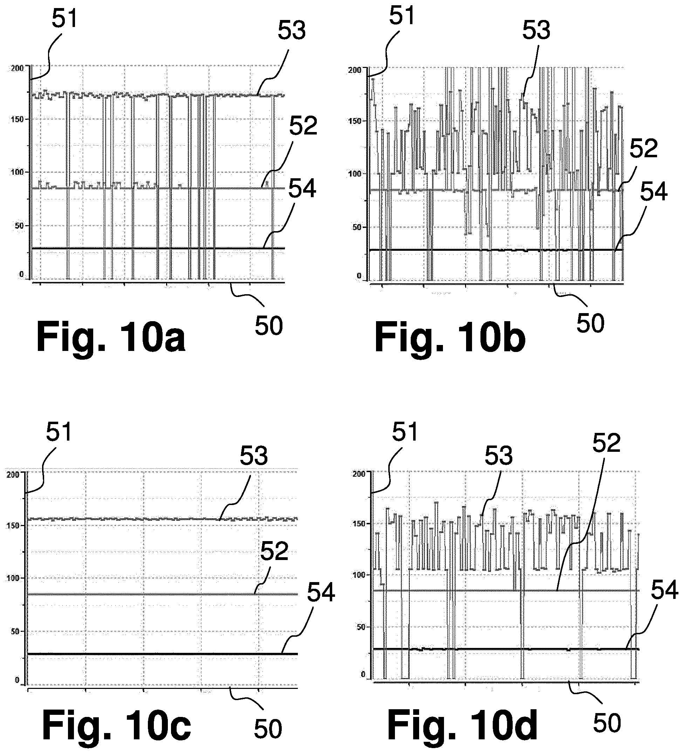

Fig. 10a bis Fig. 10d dienen zur Erläuterung der Problematik die auftritt, wenn der Füllstand im Tank exakt der Höhe der zweiten Referenzfläche oder der doppelten Höhe der zweiten Referenzfläche entspricht. Diese beiden Füllstande können von dem Ultraschallfüllstandsensor unter bestimmten Bedingungen nicht unterschieden werden. Durch eine bestimmte Analyse der Antwortsignale am Ultraschallfüllstandsensor ist es aber möglich beide Füllstände zu unterscheiden. Die Fig. 10a bis Fig. 10b zeigen jeweils über eine Zeitachse 50 auf der Signalachse 51 ein erstes Antwortsignal 54, ein zweites Antwortsignal 52 und ein drittes Antwortsignal 53. Weiter oben wurde bereits erläutert, dass das erste Antwortsignal 54 üblicherweise der ersten Referenzfläche zuzuordnen ist während das zweite Antwortsignal 52 der zweiten Referenzfläche und das dritte Antwortsignal 53 der Flüssigkeitsoberfläche im Tank zugeordnet wird, wobei die Flüssigkeitsoberfläche dem Füllstand entspricht.

Die Fig. 10a und die Fig. 10b zeigen jeweils die Antwortsignale 54, 52, 53, die sich ergeben, wenn der Füllstand genau auf Höhe der zweiten Referenzfläche liegt. Fig. 10a zeigt statische Bedingungen (weiter oben auch als statischer Modus bezeichnet), die sich ergeben, wenn das Kraftfahrzeug absolut still steht und keine Vibrationen und/oder Schwappbewegungen der Flüssigkeit in dem Tank auftreten. Fig. 10b zeigt dynamische Bedingungen (weiter oben auch als dynamischer Modus bezeichnet), die sich ergeben, wenn das Kraftfahrzeug bewegt wird und Vibrationen und/oder Schwappbewegungen in dem Tank auftreten. Zu erkennen ist, dass das erste Antwortsignal 54 zur ersten Referenzfläche sowohl in Fig. 10a bei statischen Bedingungen als auch in Fig. 10b bei dynamischen Bedingungen konstant ist und auch bei dynamischen Bedingungen, wenn überhaupt, nur minimale Schwankungen aufweist. Dies liegt daran, dass die erste Referenzfläche unabhängig vom dynamischen Modus immer unterhalb des Füllstandes liegt. Das zweite Antwortsignal 52 und das dritte Antwortsignal 53 unterscheiden sich jedoch, zwischen dem dynamischen Modus oder dem statischen Modus. Im statischen Modus (Fig 10a) ist das zweite Antwortsignal 52 im Wesentlichen Kontant und das dritte Antwortsignal 53 hat wenige kurzzeitige Abweichungen. Weiter oben wurde bereits erläutert, dass sich das dritte Antwortsignal 53 durch eine doppelte Reflektion der Ultraschallwellen am Flüssigkeitsspiegel und am Tankboden ergibt, wenn der Füllstand der Höhe der zweiten Referenzfläche entspricht. Bereits bei minimalen Vibrationen und/oder Schwappbewegungen im Tank liegt der Flüssigkeitsspiegel kurzzeitig auch über der zweiten Referenzfläche. Dann wird die einfache Reflektion der Ultraschallwellen am Flüssigkeitsspiegel als drittes Antwortsignal 53 interpretiert und das dritte Antwortsignal 53 fällt kurzzeitig ab. Dieser Effekt tritt aber im stationären Modus nicht zuverlässig auf, weil nicht davon ausgegangen werden kann, das minimale Vibrationen und/oder Schwappbewegungen zuverlässig und gleichmäßig auftreten. Im dynamischen Modus (Fig. 10b) treten regelmäßig Vibrationen und/oder Schwappbewegungen auf. Hierdurch befindet sich der Flüssigkeitsspiegel regelmäßig oberhalb und unterhalb der zweiten Referenzfläche. Dies hat den Effekt, dass sowohl das zweite Antwortsignal 52, als auch das dritte Antwortsignal 53 starken Fluktuationen unterliegen.

Die Fig. 10c und die Fig. 10d zeigen jeweils die Antwortsignale 54, 52, 53, die sich ergeben, wenn der Füllstand genau auf der doppelten Höhe der zweiten Referenzfläche liegt. Fig. 10c zeigt dabei entsprechend zu Fig. 10a statische Bedingungen während Fig. 10d entsprechend zu Fig. 10b dynamische Bedingungen darstellt. Zu erkennen ist, dass sowohl unter statischen Bedingungen, als auch unter dynamischen Bedingungen, keine Schwankungen des zweiten Antwortsignals 52 auftreten. Dies liegt daran, dass die zweite Referenzfläche immer und unabhängig von Vibrationen und Schwappbewegungen unterhalb des Füllstandes liegt. Bei dynamischen Bedingungen (Fig. 10d) treten regelmäßige Schwankungen des dritten Antwortsignals (53) auf.

Insofern kann durch eine zeitliche Auswertung des zweiten Antwortsignals 52 unterschieden werden, ob der Füllstand der doppelten Höhe der zweiten Referenzfläche entspricht oder ob der Füllstand der Höhe der zweiten Referenzfläche entspricht. Wenn bei der zeitlichen Auswertung des zweiten Antwortsignals 52 Fluktuationen des zweiten Antwortsignals zu erkennen sind, entspricht der Füllstand der Höhe der zweiten Referenzfläche und das dritte Antwortsignal 53 darf nicht als Information über den Füllstand ausgewertet werden. Wenn bei der zeitlichen Auswertung keine Fluktuationen des zweiten Antwortsignals 52 zu erkennen sind, entspricht das dritte Antwortsignal 53 dem tatsächlichen Füllstand und es kann entsprechend ausgewertet werden.

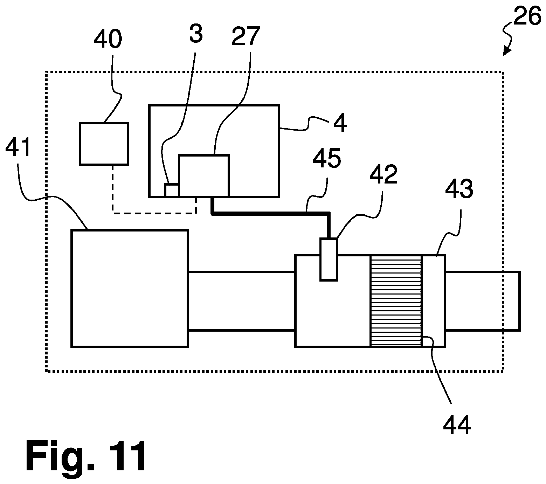

Fig. 11 zeigt ein Kraftfahrzeug 26 aufweisend eine Verbrennungskraftmaschine 41 und eine Abgasbehandlungsvorrichtung 43 zur Reinigung der Abgase der Verbrennungskraftmaschine 41. In der Abgasbehandlungsvorrichtung 43 ist ein SCR- Katalysator 44 angeordnet, mit welchem die Abgase der Verbrennungskraftmaschine 41 mit Hilfe des Verfahrens der selektiven katalytischen Reduktion gereinigt werden können. Dazu ist der Abgasbehandlungsvorrichtung 43 über einen Injektor 42 ein flüssiges Additiv zur Abgasreinigung zuführbar. Das flüssige Additiv zur Abgasreinigung wird über eine Leitung 45 von einer Entnahmeeinheit 27 aus einem Tank 4 bereitgestellt. Die Entnahmeeinheit 27 weist einen Ultraschallfüllstandsensor 3 auf, der zur Durchführung des beschriebenen Verfahrens eingerichtet ist. Das entsprechende Verfahren ist in einem Steuergerät 40 hinterlegt.

## Patentansprüche

1. Verfahren zur Bestimmung des Füllstandes (17) in einem Tank (4) für eine Flüssigkeit mit einem Ultraschallfüllstandsensor (3) und mindestens zwei Referenzflächen (1, 2) zur Reflektion einer Ultraschallwelle, die von dem Ultraschallfüllstandsensor (3) ausgesendet wird, wobei eine erste Referenzfläche (1) unterhalb einer zweiten Referenzfläche (2) angeordnet ist, aufweisend die folgenden Schritte:
a) Bestimmen einer ersten Ausbreitungsgeschwindigkeit (9) einer Ultraschallwelle in der Flüssigkeit auf einer ersten Messstrecke (5) von dem Ultraschallfüllstandsensor zu der ersten Referenzfläche (1),
b) Bestimmen einer zweiten Ausbreitungsgeschwindigkeit (10) einer Ultraschallwelle in der Flüssigkeit auf einer zweiten Messstrecke (6) von der ersten Referenzfläche (1) zu der zweiten Referenzfläche (2),
c) Messen einer Laufzeit (8) einer Ultraschallwelle von dem Ultraschallfüllstandsensor (3) zu einem Flüssigkeitsspiegel (7) der Flüssigkeit in dem Tank (4),
d) Auswählen der ersten Ausbreitungsgeschwindigkeit (9) oder der zweiten Ausbreitungsgeschwindigkeit (10) in Abhängigkeit von mindestens einem Auswahlkriterium (11, 12, 13).
e) Berechnen eines Füllstandes (17) mit der in Schritt c) gemessenen Laufzeit (8) und der in Schritt d) ausgewählten Ausbreitungsgeschwindigkeit (9, 10).

2. Verfahren nach Anspruch 1, wobei der Ultraschallfüllstandsensor (3) außerhalb des Tanks (4) angeordnet ist und eine Ultraschallwelle des Ultraschallfüllstandsensors (3) eine Kopplungsschicht (14) durchläuft, bevor es in die Flüssigkeit in dem Tank (4) eintritt, wobei die Kopplungsschicht (14) eine Tankwand (15) umfasst und die Laufzeit (8) der Ultraschallwelle in der Kopplungsschicht (14) in Schritt a) mit einem Korrekturfaktor (16) berücksichtigt wird.

3. Verfahren nach einem der vorhergehenden Ansprüche, wobei das Verfahren iterativ wiederholt wird und beim Auswählen der Ausbreitungsgeschwindigkeit (9, 10) in Schritt d) berücksichtigt wird, welche Ausbreitungsgeschwindigkeit (9, 10) bei einer vorangegangenen Verfahrensiteration ausgewählt war.

4. Verfahren nach einem der vorhergehenden Ansprüche, wobei als erstes Auswahlkriterium (11) in Schritt e) ein berechneter Füllstand (17) verwendet wird, wobei bei einem Füllstand (17) unterhalb eines Füllstandsgrenzwertes (18) die erste Ausbreitungsgeschwindigkeit (9) ausgewählt wird und bei einem Füllstand (17) oberhalb eines Füllstandsgrenzwertes (18) die zweite Ausbreitungsgeschwindigkeit (10) ausgewählt wird.

5. Verfahren nach einem der vorhergehenden Ansprüche, wobei als zweites Auswahlkriterium (12) in Schritt d) ein Vergleich zwischen der ersten Ausbreitungsgeschwindigkeit (9) und der zweiten Ausbreitungsgeschwindigkeit (10) durchgeführt wird, wobei die erste Ausbreitungsgeschwindigkeit (9) gewählt wird, wenn eine Geschwindigkeitsabweichung (19) zwischen der ersten Ausbreitungsgeschwindigkeit (9) und der zweiten Ausbreitungsgeschwindigkeit (10) einen Grenzwert (20) überschreitet.

6. Verfahren nach einem der vorhergehenden Ansprüche, wobei als drittes Auswahlkriterium (13) in Schritt d) die in Schritt c) gemessene Laufzeit (8) geprüft wird, wobei die zweite Ausbreitungsgeschwindigkeit (10) nicht ausgewählt wird, wenn die gemessene Laufzeit (8) außerhalb eines Zeitintervalls (21) liegt, welches der doppelten Laufzeit (8) zu der zweiten Referenzfläche (2) entspricht und bei einer vorangegangenen Verfahrensiteration die erste Ausbreitungsgeschwindigkeit (9) ausgewählt war.

7. Verfahren nach einem der vorhergehenden Ansprüche, wobei bei der Berechnung des Füllstandes (17) in Schritt e) folgende Unterschritte angewendet werden:
i) Berechnen des Füllstandes (17) auf Basis der ausgewählten Ausbreitungsgeschwindigkeit (9,10);
ii) Prüfen ob ein mit der zweiten Ausbreitungsgeschwindigkeit (10) ermittelter Füllstand (17) der doppelten Höhe der zweiten Referenzfläche (2) entspricht;
iii) Ermitteln einer Fluktuation eines zweiten Antwortsignals (52) der zweiten Referenzfläche (2) am Ultraschallfüllstandsensor (3) in einem Zeitintervall;
iv) Prüfen, ob die Fluktuation des zweiten Antwortsignals (52) einen vorgegebenen Grenzwert überschreitet; und
v) Korrektur des in Schritt i) berechneten Füllstandes (17) auf die Höhe der zweiten Referenzfläche (2), wenn die Schritte ii) und iv) erfüllt sind.

8. Verfahren nach einem der vorhergehenden Ansprüche, wobei in Schritt d) ein Wechsel von der ersten Ausbreitungsgeschwindigkeit (9) zu der zweiten Ausbreitungsgeschwindigkeit (10) nur erfolgt, wenn ein stationärer Modus (22) vorliegt.

9. Verfahren nach einem der vorhergehenden Ansprüche, wobei ein Eingangssignal des in Schritt d) verwendeten mindestens einen Auswahlkriteriums (11, 12, 13) mit einem Tiefpassfilter (24) gefiltert wird.

10. Verfahren nach einem der vorhergehenden Ansprüche, wobei ein Eingangssignal des in Schritt d) verwendeten mindestens einen Auswahlkriteriums (11, 12, 13) mit einer Hysterese (25) gefiltert wird.

11. Kraftfahrzeug (26) mit einem Tank (4) für eine Betriebsflüssigkeit, aufweisend einen Ultraschallfüllstandsensor (3) zur Bestimmung des Füllstandes (17) in dem Tank (4) und mindestens zwei Referenzflächen (1, 2) zur Reflektion einer Ultraschallwelle, die von dem Ultraschallfüllstandsensor (3) ausgesendet wird, wobei eine erste Referenzfläche (1) unterhalb einer zweiten Referenzfläche (2) angeordnet ist und mit mindestens einem Steuergerät (40), welches zur Füllstandsbestimmung zur Durchführung des Verfahrens nach einem der vorhergehenden Ansprüche eingerichtet ist.

## Claims

1. Method for determining the level (17) in a tank (4) for a liquid with an ultrasonic level sensor (3) and at least two reference surfaces (1, 2) for reflection of an ultrasonic wave that is emitted by the ultrasonic level sensor (3), wherein a first reference surface (1) is disposed below a second reference surface (2), comprising the following steps:
a) determining a first propagation speed (9) of an ultrasonic wave in the liquid over a first measuring distance (5) from the ultrasonic level sensor to the first reference surface (1),
b) determining a second propagation speed (10) of an ultrasonic wave in the liquid over a second measuring distance (6) from the first reference surface (1) to the second reference surface (2),
c) measuring a transition time (8) of an ultrasonic wave from the ultrasonic level sensor (3) to a liquid level (7) of the liquid in the tank (4),
d) selecting the first propagation speed (9) or the second propagation speed (10) depending on at least one selection criterion (11, 12, 13).
e) Computing a level (17) with the transition time (8) measured in step c) and the propagation speed (9, 10) selected in step d).

2. Method according to Claim 1, wherein the ultrasonic level sensor (3) is disposed outside of the tank (4) and an ultrasonic wave of the ultrasonic level sensor (3) passes through a coupling layer (14) before it enters the liquid in the tank (4), wherein the coupling layer (14) comprises a tank wall (15) and the transition time (8) of the ultrasonic wave in the coupling layer (14) is taken into account in step a) with a correction factor (16).

3. Method according to either of the preceding claims, wherein the method is repeated iteratively and when selecting the propagation speed (9, 10) in step d) it is taken into account which propagation speed (9, 10) was selected for a previous iteration of the method.

4. Method according to any one of the preceding claims, wherein a computed level (17) is used as the first selection criterion (11) in step e), wherein for a level (17) below a level limit value (18) the first propagation speed (9) is selected and for a level (17) above a level limit value (18) the second propagation speed (10) is selected.

5. Method according to any one of the preceding claims, wherein a comparison between the first propagation speed (9) and the second propagation speed (10) is performed as the second selection criterion (12) in step d), wherein the first propagation speed (9) is selected if a speed deviation (19) between the first propagation speed (9) and the second propagation speed (10) exceeds a limit value (20).

6. Method according to any one of the preceding claims, wherein the transition time (8) measured in step c) is checked as the third selection criterion (13) in step d), wherein the second propagation speed (10) is not selected if the measured transition time (8) lies outside a time interval (21) corresponding to twice the transition time (8) to the second reference surface (2) and the first propagation speed (9) was selected for a previous iteration of the method.

7. Method according to one of the preceding claims, wherein, during the calculation of the level (17) in step e), the following substeps are executed:
i) computing the level (17) based on the selected propagation speed (9, 10);
ii) checking whether a level (17) which is determined at the second propagation speed (10) corresponds to twice the height of the second reference surface (2);
iii) determining a fluctuation in a second response signal (52) of the second reference surface (2) at the ultrasonic level sensor (3) in a time interval;
iv) checking whether the fluctuation in the second response signal (52) exceeds a prespecified limit value; and
v) correcting the level (17) which is computed in step i) to the height of the second reference surface (2) when steps ii) and iv) are complete.

8. Method according to any one of the preceding claims, wherein in step d) a change from the first propagation speed (9) to the second propagation speed (10) only takes place if a stationary mode (22) exists.

9. Method according to any one of the preceding claims, wherein an input signal of the at least one selection criterion (11, 12, 13) used in step d) is filtered with a low pass filter (24) .

10. Method according to any one of the preceding claims, wherein an input signal of the at least one selection criterion (11, 12, 13) used in step d) is filtered with a hysteresis (25).

11. Motor vehicle (26) with a tank (4) for an operating liquid, comprising an ultrasonic level sensor (3) for determining the level (17) in the tank (4) and at least two reference surfaces (1, 2) for reflection of an ultrasonic wave that is emitted by the ultrasonic level sensor (3), wherein a first reference surface (1) is disposed below a second reference surface (2), and with at least one controller (40) that is arranged for level determination to carry out the method according to any one of the preceding claims.

## Revendications

1. Procédé permettant de déterminer le niveau de remplissage (17) dans un réservoir (4) pour un liquide par un capteur de niveau de remplissage à ultrasons (3) et au moins deux surfaces de référence (1, 2) servant à réfléchir une onde ultrasonore qui est émise par le capteur de niveau de remplissage à ultrasons (3), une première surface de référence (1) étant disposée au-dessous d'une deuxième surface de référence (2), présentant les étapes suivantes consistant à :
a) déterminer une première vitesse de propagation (9) d'une onde ultrasonore dans le liquide sur une première section de mesure (5) du capteur de niveau de remplissage à ultrasons à la première surface de référence (1),
b) déterminer une deuxième vitesse de propagation (10) d'une onde ultrasonore dans le liquide sur une deuxième section de mesure (6) de la première surface de référence (1) à la deuxième surface de référence (2),
c) mesurer un temps de propagation (8) d'une onde ultrasonore du capteur de niveau de remplissage à ultrasons (3) à un niveau de liquide (7) du liquide dans le réservoir (4),
d) sélectionner la première vitesse de propagation (9) ou la deuxième vitesse de propagation (10) en fonction d'au moins un critère de sélection (11, 12, 13,
e) calculer un niveau de remplissage (17) à l'aide du temps de propagation (8) mesuré à l'étape c) et de la vitesse de propagation (9, 10) sélectionnée à l'étape d).

2. Procédé selon la revendication 1, dans lequel le capteur de niveau de remplissage à ultrasons (3) est disposé à l'extérieur du réservoir (4) et une onde ultrasonore du capteur de niveau de remplissage à ultrasons (3) traverse une couche de couplage (14) avant d'entrer dans le liquide dans le réservoir (4), la couche de couplage (14) comprenant une paroi de réservoir (15), et le temps de propagation (8) de l'onde ultrasonore dans la couche de couplage (14) étant pris en compte à l'étape a) par un facteur de correction (16).

3. Procédé selon l'une quelconque des revendications précédentes, dans lequel le procédé est répété de manière itérative, et lors de la sélection de la vitesse de propagation (9, 10) à l'étape d), il est pris en compte quelle vitesse de propagation (9, 10) était sélectionnée lors d'une itération de procédé précédente.

4. Procédé selon l'une quelconque des revendications précédentes, dans lequel un niveau de remplissage calculé (17) est utilisé comme premier critère de sélection (11) à l'étape e), dans lequel la première vitesse de propagation (9) est sélectionnée pour un niveau de remplissage (17) au-dessous d'une valeur limite de niveau de remplissage (18), et la deuxième vitesse de propagation (10) est sélectionnée pour un niveau de remplissage (17) au-dessus d'une valeur limite de niveau de remplissage (18).

5. Procédé selon l'une quelconque des revendications précédentes, dans lequel une comparaison entre la première vitesse de propagation (9) et la deuxième vitesse de propagation (10) est effectuée comme deuxième critère de sélection (12) à l'étape d), la première vitesse de propagation (9) étant sélectionnée si un écart de vitesse (19) entre la première vitesse de propagation (9) et la deuxième vitesse de propagation (10) dépasse une valeur limite (20).

6. Procédé selon l'une quelconque des revendications précédentes, dans lequel un temps de propagation (8) mesuré à l'étape c) est vérifié comme troisième critère de sélection (13) à l'étape d), la deuxième vitesse de propagation (10) n'étant pas sélectionnée si le temps de propagation (8) mesuré est situé en dehors d'un intervalle de temps (21) qui correspond à deux fois le temps de propagation (8) jusqu'à la deuxième surface de référence (2) et si pour une itération de procédé précédente la première vitesse de propagation (9) était sélectionnée.

7. Procédé selon l'une quelconque des revendications précédentes, dans lequel, pour le calcul du niveau de remplissage (17) à l'étape e), les sous-étapes suivantes sont utilisées, consistant à :
i) calculer le niveau de remplissage (17) sur la base de la vitesse de propagation (9, 10) sélectionnée ;
ii) vérifier si un niveau de remplissage (17) établi à l'aide de la deuxième vitesse de propagation (10) correspond à deux fois la hauteur de la deuxième surface de référence (2) ;
iii) établir une fluctuation d'un deuxième signal de réponse (52) de la deuxième surface de référence (2) au niveau du capteur de niveau de remplissage à ultrasons (3) dans un intervalle de temps ;
iv) vérifier si la fluctuation du deuxième signal de réponse (52) dépasse une valeur seuil prédéfinie ; et
v) corriger le niveau de remplissage (17) calculé à l'étape i) selon la hauteur de la deuxième surface de référence (2) si les étapes ii) et iv) sont satisfaites.

8. Procédé selon l'une quelconque des revendications précédentes, dans lequel à l'étape d), un changement de la première vitesse de propagation (9) à la deuxième vitesse de propagation (10) n'a lieu que si un mode stationnaire (22) est présent.

9. Procédé selon l'une quelconque des revendications précédentes, dans lequel un signal d'entrée du au moins un critère de sélection (11, 12, 13) utilisé à l'étape d) est filtré par un filtre passe-bas (24).

10. Procédé selon l'une quelconque des revendications précédentes, dans lequel un signal d'entrée du au moins un critère de sélection (11, 12, 13) utilisé à l'étape d) est filtré par une hystérèse (25).

11. Véhicule automobile (26) comprenant un réservoir (4) pour un liquide de service, présentant un capteur de niveau de remplissage à ultrasons (3) servant à déterminer le niveau de remplissage (17) dans le réservoir (4) et au moins deux surfaces de référence (1, 2) servant à réfléchir une onde ultrasonore qui est émise par le capteur de niveau de remplissage à ultrasons (3), une première surface de référence (1) étant disposée au-dessous d'une deuxième surface de référence (2), et au moins un appareil de commande (40) qui est aménagé pour la détermination de niveau de remplissage pour exécuter le procédé selon l'une quelconque des revendications précédentes.
